# EUROPÄISCHE PATENTANMELDUNG

(11) **EP 3 385 068 A1**
(43) Veröffentlichungstag der Anmeldung: **10.10.2018**
(21) Anmeldenummer: 18153147.6
(22) Anmeldetag: 24.01.2018
(51) Int. Cl.: B30B 11/00, B30B 11/08, B30B 15/30, G01N 21/17, B30B 15/32

(54) **VORRICHTUNG ZUM KOMPRIMIEREN EINES PRODUKTS**

(30) Priorität: 07.03.2017 DE 102017203650
(71) Anmelder: Robert Bosch GmbH, 70442 Stuttgart (DE)
(72) Erfinder: Runft, Werner, 71364 Winnenden (DE); Brinz, Thomas, 73266 Bissingen A.D. Teck (DE); Manz, Stefan, 73266 Bissingen Teck (DE); Kleine-Koenig, Benedict, 73635 Rudersberg (DE)

(57) **Zusammenfassung**

Die vorliegende Erfindung betrifft eine Vorrichtung zum Komprimieren eines Produkts (26), umfassend zumindest einen Rotor (18) mit mehreren Öffnungen (24), mit zumindest einem unteren Stempel (20) und einem oberen Stempel (22) die in die Öffnung (24) zur Verdichtung des Produkts (26) bewegbar ausgebildet sind, wobei zumindest ein auf Röntgenstrahlung basierender Sensor (12, 40) vorgesehen ist zur Messung bestimmter Eigenschaften des Produkts (26, 27).

## Beschreibung

### Stand der Technik

Die vorliegende Erfindung betrifft eine Vorrichtung zum Komprimieren eines Produkts nach der Gattung des unabhängigen Anspruchs.

Eine gattungsgemäße Vorrichtung ist beispielsweise bekannt aus der DE 102008049015B4. Ein Verfahren zur Qualitätsüberwachung von pulverförmigen Pressmaterial für eine Rundläuferpresse, bei der das Pressmaterial von einem Reservoir über einen vorzugsweise vertikalen Zuführkanal einer Füllvorrichtung zugeführt wird, die kontinuierlich Matrizen eines Rotors mit einem Pressmaterial befüllt, zeichnet sich dadurch aus, dass dem Zuführkanal ein Mikrowellenresonator mit einer Auswerteeinheit zugeführt wird, die die Feuchte und/oder die Dichte und/oder die Größe des Granulats des Pressmaterials misst und mindestens eine Messgröße des Mikrowellenresonators zur Änderung einer Stellgröße der Rundläuferpresse verwendet.

Es ist Aufgabe der vorliegenden Erfindung, die Messgenauigkeit weiter zu verbessern. Diese Aufgabe wird gelöst durch die Merkmale des unabhängigen Anspruchs.

### Vorteile der Erfindung

Die Vorrichtung gemäß den Merkmalen des unabhängigen Anspruchs hat demgegenüber den Vorteil, dass die Messgenauigkeit weiter verbessert wird. Durch die Verwendung von Röntgenstrahlung ist nämlich die Messung nicht sensitiv auf Feuchteschwankungen. Da sich der Feuchtegehalt (der Anteil des Wassers) bei Granulaten für die Tablettierung prozessbedingten Schwankungen unterliegt, ist die auf Röntgenstrahlung basierende Messmethode besonders geeignet. Außerdem zeichnet sich die Röntgenstrahlung durch eine hohe Sensibilität für Dichteänderungen aus. Damit kann eine schnelle und rechtzeitige Anpassung insbesondere der Dosierung erreicht werden.

In einer zweckmäßigen Weiterbildung ist vorgesehen, dass zumindest eine Auswerteeinheit vorgesehen ist, die in Abhängigkeit von dem Ausgangssignal des Sensors eine Dosierung bzw. Komprimierung des Produkts beeinflusst. Dadurch kann während des laufenden Produktionsprozesses eine Anpassung der wichtigen Prozessparameter erfolgen, so dass insbesondere die Masse des komprimierten Produkts konstant gehalten werden kann. Besonders zweckmäßig wird dies erreicht, indem die Auswerteeinheit die Bewegung und/oder die Kraftaufbringung zumindest eines Stempels beeinflusst. Insbesondere kann über den Hub des Stempels das Volumen und damit die Masse des zu komprimierenden Produkts schnell an eine sich ändernde Dichte des zugeführten Produkts angepasst werden. Damit erhöht sich die Genauigkeit des Produktionsprozesses. Die Anzahl von fehlerhaften Produkte wird reduziert.

In einer zweckmäßigen Weiterbildung ist vorgesehen, dass der Sensor an einem Steigrohr eines Füllschuhs angeordnet ist. Gerade an dieser Stelle kann noch vor der Dosierung die Dichte des zugeführten Produkts ermittelt werden und so erforderlichenfalls auf Dichteschwankungen frühzeitig reagiert werden.

In einer zweckmäßigen Weiterbildung ist vorgesehen, dass der Sensor an einer Produktabführung angeordnet ist, über die das komprimierte Produkt von der Rotor abgeführt wird. Der dort angeordnete Sensor kann die fertige Tablette als Beispiel für ein komprimiertes Produkt zur Qualitätskontrolle durchleuchten. Dabei kann die Geometrie des komprimierten Produkts (Länge, Breite, Höhe und weiteres) gemessen werden. Insbesondere bei mehrschichtigen Produkten kann bei einer entsprechenden Ausrichtung des Produkts zur Messung ebenfalls die prozentuale Verteilung der einzelnen Komponenten gemessen werden. An dieser Stelle kann rechtzeitig ein fehlerhaftes Produkt ausgeschleust werden. Hierzu ist zweckmäßigerweise ein Auswahlmittel vorzusehen, welches in Abhängigkeit von dem Ausgangssignal des Sensors angesteuert ist.

In einer zweckmäßigen Weiterbildung umfasst der Sensor zumindest zwei vorzugsweise orthogonal zueinander angeordnete Strahlungsquellen und/oder zwei vorzugsweise orthogonal zueinander angeordnete Detektoren. Damit kann die komplette Geometrie des Produkts erfasst werden, was die Qualität der Auswertung weiter verbessert.

In einer zweckmäßigen Weiterbildung ist eine Wiegeeinrichtung vorgesehen, deren Ausgangssignal der Auswerteeinheit zugeführt ist, insbesondere zur Kalibrierung des Sensors. Dadurch können entsprechende Kennlinien und Kenngrößen ermittelt werden, mit deren Hilfe die auf Röntgenstrahlung basierende (weitere) Messung des Gewichts korreliert werden. Dadurch erhöht sich die Genauigkeit der Anordnung weiter.

Weitere zweckmäßige Weiterbildungen ergeben sich aus weiteren abhängigen Ansprüchen und aus der Beschreibung.

### Kurze Beschreibung der Zeichnung

Nachfolgend wird ein Ausführungsbeispiel der Erfindung unter Bezugnahme auf die begleitende Zeichnung im Detail beschrieben. In der Zeichnung zeigt die
- Figur 1: eine Tablettenpresse mit einer beispielhaften Anordnung der Sensoren,
- Figur 2: einen Schnitt durch einen Füllschuh einer Tablettenpresse mit zugehöriger Sensoranordnung sowie
- Figur 3: eine schematische Darstellung unterschiedlicher Verfahrensschritte bei der Messung mit Röntgenstrahlen an der Tablettenpresse.

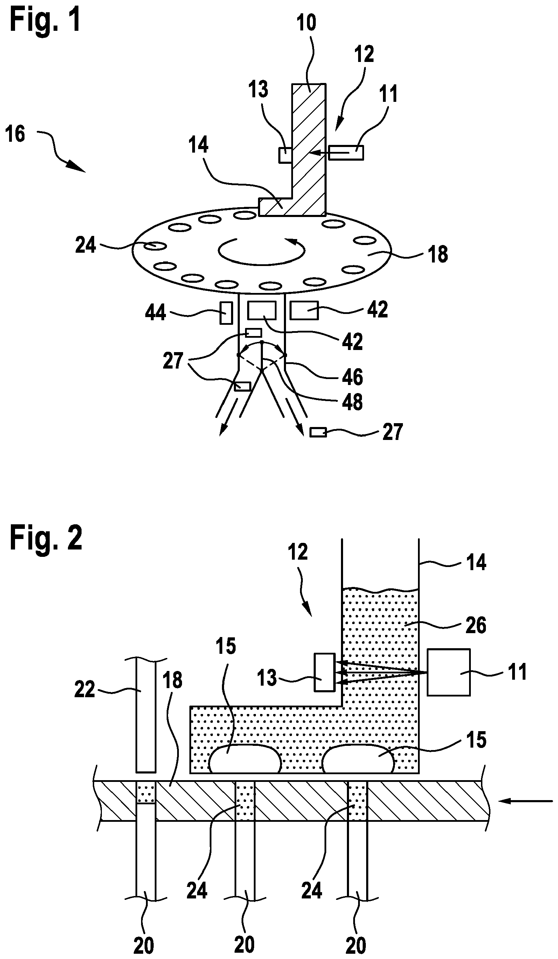

Bei dem Ausführungsbeispiel gemäß Figur 1 umfasst eine Tablettenpresse 16 zumindest einen Rotor 18. Der Rotor 18 ist beispielhaft scheibenförmig ausgebildet und mit beispielsweise als Bohrungen ausgestalteten Öffnungen 24 versehen. Der Rotor 18 rotiert um seinen Mittelpunkt. Die Öffnungen 24 sind auf einem Radius des Rotors 18 angeordnet und in axialer Richtung durchgängig ausgeführt. Oberhalb des Rotors 18 ist ein Steigrohr 10 angeordnet, welches in einem Füllschuh 14 ausläuft. Der Füllschuh 14 dient der Zuführung eines zu komprimierenden Produkts 26 zu den Öffnungen 24. An dem Steigrohr 10 befindet sich ein Sensor 12. Der Sensor 12 ist als Röntgensensor ausgebildet wie nachfolgend näher ausgeführt. Der Sensor 12 umfasst zumindest eine Strahlungsquelle 11 und einen Detektor 13. Unter Verwendung eines unteren Stempels 20 und eines oberen Stempels 22 wird das pulverförmige Produkt 26 komprimiert und beispielsweise als Tablette bzw. komprimiertes Produkt 27 über eine Produktabführung 46 von dem Rotor 18 entfernt und abgeführt. Die oberen Stempel 22 und die unteren Stempel 20 können in axialer Richtung in die Öffnungen 24 bewegt werden.

In der Produktabführung 46 ist zumindest ein weiterer Sensor 40 angeordnet. Dieser umfasst zumindest einen Detektor 44 und eine gegenüberliegende Strahlungsquelle 42, die das von dem Rotor 18 abgeführte komprimierte Produkt 27 durchstrahlt. Vorzugsweise umfasst der Sensor 40 noch eine weitere Strahlungsquelle 42 und einen weiteren, dieser Strahlungsquelle 42 gegenüberliegenden Detektor 44. Die beiden Strahlungsquellen 42 sind vorzugsweise orthogonal zueinander angeordnet in der Weise, dass eine der Strahlungsquellen 42 das komprimierte Produkt 27 seitlich durchstrahlt, die andere Strahlungsquelle 42 das komprimierte Produkt 27 durch dessen Ober- bzw. Unterseite durchstrahlt. Damit wird sichergestellt, dass das komprimierte Produkt 27 vollständig aus zumindest zwei Richtungen durchstrahlt wird. Nach dem Sensor 40 in Richtung der Transportrichtung des Produkts 27 ist an der Produktabführung 46 ein Auswahlmittel 48 angeordnet. Das Auswahlmittel 48 dient dazu, ein von dem Sensor 40 als Ausschuss klassifiziertes komprimiertes Produkt 27 auszuschleusen. Hierzu ist beispielsweise das Auswahlmittel 48 als bewegliche Weiche ausgebildet, die abhängig von der Klassifizierung des komprimierten Produkts 27 dieses entweder als Ausschuss abführt oder das in Ordnung befundene Produkt 27 dem weiteren Verarbeitungsprozess zuführt. Das Auswahlmittel 48 wird von der Auswerteeinheit 28 in Abhängigkeit von dem Ausgangssignal des Sensors 12, 40 angesteuert.

In der Darstellung gemäß Figur 2 ist ein Schnitt durch den Füllschuh 14 gezeigt. In den Füllschuh 14 gelangt das zu komprimierende Produkt 26 über das Steigrohr 10. Im unteren Bereich des Steigrohrs 10 ist an der einen Seite eine Strahlungsquelle 11 angeordnet, die Röntgenstrahlung durch einen Bereich des Steigrohrs 10, das mit Produkt 26 versehen ist, schickt. An der gegenüberliegenden Seite des Steigrohrs 10 ist ein Detektor 13 so angeordnet, dass er die von der Strahlungsquelle 11 ausgesendete und durch das Produkt 26 transmittierte Röntgenstrahlung detektieren kann. Abhängig von der jeweiligen Dichte des Produkts 26 wird ein Teil der emittierten Strahlung absorbiert. Somit ist die empfangene Strahlung ein Maß für die Dichte des Produkts 26 im Füllschuh 14. Nach unten hin verbreitert sich der Füllschuh 14 so, dass das Produkt 26 beispielsweise in zwei Öffnungen 24 in dem Rotor 18 gebracht werden kann. Hierzu ist jeweils ein Flügelrad 15 vorgesehen, welches durch rotierende Bewegungen das Produkt 26 in die jeweilige Öffnung 24 des Rotors 18 eindosiert. Schematisch dargestellt ist ein unterer Stempel 20 bzw. nachfolgend ein oberer Stempel 22 wie nachfolgend näher beschrieben zur Komprimierung des in die Öffnungen 24 eindosierten Produkts 26. Das Steigrohr 10 weist beispielsweise einen runden oder rechteckigen Querschnitt auf. Mit Blick auf eine gleichmäßige Durchstrahlung des Produkts 26 ist zumindest in dem Bereich, in dem der Sensor 12 angeordnet ist, ein rechteckiger Querschnitt vorteilhaft.

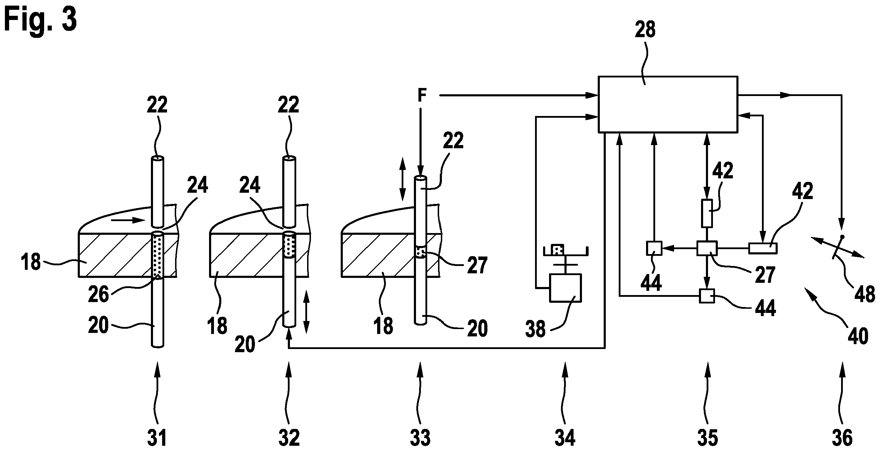

In der Seitenansicht gemäß Figur 3 ist ein Schnitt durch den Rotor 18 in axialer Richtung gezeigt. Der Rotor 18 weist eine bestimmte Dicke auf. Die Öffnungen 24 sind beispielsweise als Bohrungen ausgebildet und erstrecken sich über die gesamte Dicke des Rotors 18 in axialer Richtung. Die Öffnungen 24 können entweder direkt den Durchmesser der Tablette bzw. des komprimierten Produkts 27 aufweisen oder deutlich größer mit einer Stufe ausgeführt werden, um dann dort Matrizen mit einem entsprechenden Innen- und Außendurchmesser (Innendurchmesser definiert den Tablettendurchmesser) einzuschieben. In die Öffnung 24 wird das zu komprimierende Produkt 26 eindosiert, Schritt 31. Oberhalb der Öffnung 24 befindet sich der obere Stempel 22. Unterhalb der Unterseite der Öffnung 24 befindet sich der untere Stempel 20. Bei dem Schritt 31 schließt die Oberseite des unteren Stempels 20 bündig ab mit der Unterseite des Rotors 18, so dass kein Produkt 26 nach unten entweichen kann. Der untere Stempel 20 zieht zur volumetrischen Dosierung das Produkt 26 in die Öffnung 24. Oberer und unterer Stempel 20, 22 sind so ausgebildet, dass diese von beiden Seiten in die Öffnung 24 verfahren werden zur Komprimierung des vorläufig dosierten Produkts 26.

In einem weiteren Schritt 32 schiebt der untere Stempel 20 das Produkt 26 weiter nach oben bzw. zurück zu einer definierten Dosierung des komprimierten Produkts 27, beispielsweise eine Tablette.

In einem weiteren Schritt 33 erfolgt die Komprimierung des Produkts 26. Die Kraft F zur Komprimierung wird gemessen, um eine Korrelation zur Masse des Produkts 27 herzustellen. Die ermittelte Kraft F wird ebenfalls der Auswerteeinheit 28 mitgeteilt. Hierbei werden unterer und/oberer Stempel 20, 22 in einem bestimmten Abstand zueinander verfahren.

In einem weiteren Schritt 34 erfolgt eine gravimetrische Wiegung des komprimierten Produkts 27 nach der Komprimierung aus Schritt 33. Hierzu ist eine entsprechende Wiegeeinrichtung 38 vorgesehen. Das ermittelte gravimetrische Gewicht des Produkts 27 kann ebenfalls der Auswerteeinheit 28 mitgeteilt werden. Über das Ausgangssignal der Wiegeeinrichtung 38 könnte beispielsweise eine Kalibrierung des Ausgangssignals des Sensors 12, 40 vorgenommen werden, indem das in Schritt 35 ermittelte Gewicht des Produkts 27 als tatsächliches Ist-Gewicht angesehen wird, auf das die nachfolgende Messung durch den Sensor 40 über entsprechende Korrekturfaktoren angepasst wird. Auch für die erstmalige Inbetriebnahme der Sensoren 12, 40 könnte die Wiegeeinrichtung 38 für eine Startkalibrierung verwendet werden.

In einem weiteren Schritt 35 erfolgt eine Messung der Qualitätsparameter des komprimierten Produkts 27 durch einen Sensor 40 auf Basis von Röntgenstrahlen. Diese Röntgenstrahlen werden erzeugt durch eine Strahlungsquelle 42, durch einen auf der anderen Produktseite platzierten Detektor 44 detektiert und der Auswerteeinheit 28 mitgeteilt. Bevorzugt besteht der Sensor 40 aus zwei vorzugsweise orthogonal zueinander angeordneten Strahlungsquellen 42 mit zugehörigen vorzugsweise orthogonal angeordneten Detektoren 44. Für Produkte 27, die keine Rotationssymmetrie aufweisen (ovale, längliche Tabletten, sogenannte Oblongs) könnte noch ein weiteres bzw. drittes Sensorelement (bestehend aus Strahlungsquelle 42 und gegenüberliegend angeordnetem Detektor 44) vorgesehen werden, um die gesamte Geometrie messen zu können.

Der Sensor 40 befindet sich beispielsweise an der Produktabführung 46. Eine entsprechende Auswertung der Sensorsignale erfolgt beispielsweise durch die Auswerteeinheit 28. Die Auswerteeinheit 28 dient auch der Regelung des Pulvervolumens vor der Komprimierung, also im Schritt 32. Durch einen Pfeil ist angedeutet, dass die Auswerteeinheit 28 den unteren Stempel 20 im Schritt 32 ansteuert, beispielsweise abhängig von dem Ausgangssignal des Sensors 40.

Über den Hub des unteren Stempels 20 kann das Volumen des in die Öffnung 24 eindosierten Produkts 26 verändert werden. Wird im Rahmen der Messung in Schritt 34 und/oder Schritt 35 beispielsweise eine Abweichung des Gewichts nach unten (Ist-Gewicht geringer als Soll-Gewicht) detektiert, so kann beispielsweise der Hub des unteren Stempels 20 etwas verringert werden, so dass die Öffnung 24 ein größeres Volumen für das einzudosierende Produkt 26 aufweist.

In einem weiteren Schritt 36 wird das von dem Sensor 40 durchstrahlte Produkt 27 dann ausgeschleust, wenn das Sensorsignal von der Auswerteeinheit 28 als Ausschuss detektiert wurde, beispielsweise weil bestimmte Anforderungen an Gewicht und/oder Dichte und/oder geometrischen Abmessungen des komprimierten Produkts 27 nicht innerhalb der tolerablen Grenzwerte liegen. Abhängig von dem Ausgangssignal des Sensors 40 steuert die Auswerteeinheit 28 das Auswahlmittel 48 so an, um ein als ordnungsgemäß klassifiziertes Produkt 27 dem weiteren Verarbeitungsprozess zuzuführen bzw. ein als Ausschuss klassifiziertes Produkt 27 aus dem weiteren Produktionsprozess zu entfernen. Weiterhin könnte der Sensor 40 auch dahingehend verwendet werden, dass Fremdpartikel in dem komprimierten Produkts 27 detektiert werden wie dies beispielsweise durch signifikante Grauwertänderungen an bestimmten Stellen zum Ausdruck kommen könnte.

Durch die Anordnung des Sensors 12 kann eine Messung der Schüttgut-Dichte des abzufüllen Produkts 26 mittels der Schwächung der Röntgenstrahlen nach dem Durchdringen des Schüttguts bzw. Produkts 26 ermittelt werden. Der Vorteil von Röntgenstrahlung ist hierbei die hohe Sensitivität für Dichteänderungen bei gleichzeitiger niedriger Sensitivität für Wasser. Da der Feuchtegehalt (Anteil Wasser) bei Granulaten für die Tablettierung prozessbedingten Schwankungen unterliegt, ist diese Messmethode hierfür besonders geeignet. Das Volumen bei der Dichtemessung muss konstant gehalten werden. Das bedeutet, dass im fließenden Zustand des Produkts 26 das Messvolumen immer voll befüllt sein muss. Eine Optimierung des Messvolumens ist ebenfalls möglich. Damit eignet sich insbesondere die Anordnung des Sensors 12 im unteren Bereich des Steigrohrs 10, nahe an der Abfüllstelle des Produkts 26 in die Öffnung 24.

Eine Messung des Sensors 12, 40 mittels Röntgenstrahlen wird in Transmission ausgeführt. Dies heißt, dass das zu detektierende Produkt 26, 27 zwischen der Strahlungsquelle 11, 42 und dem die Röntgenstrahlung erfassenden Detektor 13, 44 angeordnet ist. Damit wird repräsentativ der gesamte Volumenstrom des Produkts 26 bzw. das komplette komprimierte Produkt 27 erfasst. Gerade durch die Verwendung von Röntgenstrahlung ist diese Messung nicht sensitiv auf Feuchteschwankungen. Der Detektor 13, 44 ist beispielsweise als bildaufnehmendes Sensorelement wie ein CCD-Sensor ausgeführt. Hierbei verändern sich beispielsweise die Grauwerte in Abhängigkeit von der Intensität der erfassten Strahlung. Der Grauwert ist somit beispielsweise ein Maß für die Dichte des durchstrahlten Produkts 26, 27. Über den bildaufnehmenden Detektor 44 kann über eine signifikante Änderung des Grauwerts die Kontur bzw. die Geometrie des durchstrahlten komprimierten Produkts 27 erfasst werden. Über entsprechende Flächen in Verbindung mit den zugehörigen Grauwerten kann auf die Masse des durchstrahlten Produkts 27 geschlossen werden. Der Grauwert kann somit ein ortsaufgelöstes Signal sein, das in der Abbildungsebene über die Intensität ein Maß für die durchleuchtete Masse angibt.

Der Sensor 12 kann online, also während des laufenden Produktionsprozesses, ständig die Dichte des über das Steigrohr 10 zugeführten Produkts 26 erfassen. Der Sensor 40 kann ebenfalls ständig die Dichte oder sonstige charakteristische Parameter des komprimierten Produkts 27 erfassen und im laufenden Produktionsprozess über die Auswerteeinheit 28 beispielsweise die Kraft F oder den Hub der oder des Stempel(s) 20, 22 korrigieren. Eine Änderung der Dichte kann dazu genutzt werden, um einen Korrekturfaktor zu berechnen, der bei der volumetrischen Dosierung, also vor der Komprimierung, berücksichtigt wird, um die Masse konstant zu halten. Der Sensor 12 erkennt einen Sprung in der Granulatdichte bzw. Dichte des Produkts 26. Dies kann beispielsweise über ein verändertes Dosiervolumen wie in Schritt 32 angedeutet über den veränderten Hub des unteren Stempels 20 eingestellt und vollständig kompensiert werden, noch bevor die Komprimierung und die Messung der Masse des komprimierten Produkts 27 erfolgt.

Auch Qualitätsparameter nach der Pressung können ermittelt werden. Hierbei ist zweckmäßigerweise vorgesehen, dass zwei orthogonal zueinander angeordnete Sensorelemente 40 eine fertige Tablette als Beispiel für ein komprimiertes Produkt 27 zur Qualitätskontrolle durchstrahlen. Dabei kann die Geometrie des Produkts 27 (Länge, Breite, Höhe, und weitere Parameter) gemessen werden. Zudem kann über den Grauwert und einer hinterlegten Kalibrierung (beispielsweise eine Kalibriergerade) die Masse des komprimierten Produkts 27 berechnet werden. Bei mehrschichtigen Produkten kann bei entsprechender Ausrichtung des Produkts 27 zur Messung ebenfalls die prozentuale Verteilung der einzelnen Komponenten innerhalb des Produkts 27 gemessen werden.

Dadurch können Störungen von Dichteschwankungen im Schüttgut bzw. Produkt 26 schon vor der Komprimierung erkannt und deren Einfluss auf die Dosierung kompensiert werden. Die Auswerteeinheit 28 liest das Signal der Dichtemessung und regelt darauf die volumetrische Dosierung vor der Komprimierung des Produkts 26. Hierzu steuert die Auswerteeinheit 28 zumindest den unteren Stempel 20 und/oder den oberen Stempel 22 in der gewünschten Art und Weise an. Hierbei könnte beispielsweise dem Stempel 20, 22 eine veränderte Endposition vorgegeben werden. Alternativ könnten die Stempel 20, 22 auch so angesteuert werden, dass sie mit einer veränderten Kraft F auf das zu komprimierende Produkt 26 in der Öffnung 24 einwirken. Ebenfalls kann die Auswerteeinheit 28 abhängig von den ermittelten Qualitätsgrößen das Auswahlmittel 48 so ansteuern, dass ein als Ausschuss erkanntes Produkt 27 aus dem weiteren Produktionsprozess ausgeschleust wird. Die Messung unter Verwendung von Röntgenstrahlung ist nicht sensitiv auf Feuchteschwankungen, wodurch sich die Genauigkeit des Produktionsprozesses erhöht.

## Patentansprüche

1. Vorrichtung zum Komprimieren eines Produkts (26), umfassend zumindest einen Rotor (18) mit mehreren Öffnungen (24) zur Aufnahme des zu komprimierenden Produkts (26), mit zumindest einem unteren Stempel (20) und einem oberen Stempel (22), die zum Komprimieren des Produkts (26) relativ zueinander in der Öffnung (24) bewegbar ausgebildet sind, **dadurch gekennzeichnet, dass** zumindest ein auf Röntgenstrahlung basierender Sensor (12, 40) vorgesehen ist zur Messung bestimmter Eigenschaften des Produkts (26, 27).

2. Vorrichtung nach Anspruch 1, **dadurch gekennzeichnet, dass** zumindest eine Auswerteeinheit (28) vorgesehen ist, die in Abhängigkeit von dem Ausgangssignal des Sensors (12,40) eine Dosierung bzw. Komprimierung des Produkts (26,27) beeinflusst.

3. Vorrichtung nach einem der vorhergehenden Ansprüche, **dadurch gekennzeichnet, dass** zumindest eine Auswerteeinheit (28) vorgesehen ist zur Beeinflussung einer Bewegung oder Kraftaufbringung des unteren und/oder oberen Stempels (20,22) in Abhängigkeit von dem Ausgangssignal des Sensors (12,40).

4. Vorrichtung nach einem der vorhergehenden Ansprüche, **dadurch gekennzeichnet, dass** zumindest ein Füllschuh (14) vorgesehen ist zur Befüllung der Öffnung (24) mit Produkt (26), wobei der Füllschuh (14) zumindest ein Steigrohr (10) umfasst, an dem der Sensor (12) angeordnet ist.

5. Vorrichtung nach einem der vorhergehenden Ansprüche, **dadurch gekennzeichnet, dass** zumindest eine Produktabführung (46) vorgesehen ist zur Abführung des komprimierten Produkts (27) von dem Rotor (18), wobei der Sensor (12, 40) an der Produktabführung (46) angeordnet ist.

6. Vorrichtung nach einem der vorhergehenden Ansprüche, **dadurch gekennzeichnet, dass** der Sensor (12,40) zumindest eine Strahlungsquelle (11,42) und zumindest einen Detektor (13,44) umfasst, wobei der Detektor (13,44) die von der Strahlungsquelle (11,42) durch das Produkt (26,27) transmittierte Röntgenstrahlung erfasst.

7. Vorrichtung nach einem der vorhergehenden Ansprüche, **dadurch gekennzeichnet, dass** der Sensor (12, 40) zumindest zwei vorzugsweise orthogonal zueinander angeordneten Strahlungsquellen (11,42) und/oder zumindest zwei vorzugsweise orthogonal zueinander angeordnete Detektoren (13,44) umfasst.

8. Vorrichtung nach einem der vorhergehenden Ansprüche, **dadurch gekennzeichnet, dass** zumindest ein Auswahlmittel (48) vorgesehen ist, das in Abhängigkeit von dem Ausgangssignal des Sensors (12,40) angesteuert ist.

9. Vorrichtung nach einem der vorhergehenden Ansprüche, **dadurch gekennzeichnet, dass** das Auswahlmittel (48) ein von der Auswerteeinheit (28) als nicht ordnungsgemäß erkanntes Produkt (27) aus dem weiteren Verarbeitungsprozess ausschleust.

10. Vorrichtung nach einem der vorhergehenden Ansprüche, **dadurch gekennzeichnet, dass** zumindest eine Wiegeeinrichtung (38) vorgesehen ist, deren Ausgangssignal der Auswerteeinheit (28) zugeführt ist, insbesondere zur Kalibrierung des Sensors (12).

11. Vorrichtung nach einem der vorhergehenden Ansprüche, **dadurch gekennzeichnet, dass** mittels des Sensors (12,40) die Dichte und/oder die Masse und/oder die Geometrie des Produkts (26,27) ermittelt ist.

12. Vorrichtung nach einem der vorhergehenden Ansprüche, **dadurch gekennzeichnet, dass** der Detektor (13,44) als bildaufnehmendes Sensorelement, vorzugsweise als CCD-Sensor, ausgebildet ist.
